# EUROPÄISCHE PATENTSCHRIFT

(11) **EP 4 100 714 B1**
(45) Veröffentlichungstag und Bekanntmachung des Hinweises auf die Patenterteilung: **13.05.2026**
(21) Anmeldenummer: 20824147.1
(22) Anmeldetag: 07.12.2020
(51) Int. Cl.: G01N 3/56, G01N 1/28, G01N 3/46, G01N 19/04

(54) **VORRICHTUNG ZUM REPRODUZIERBAREN BEANSPRUCHEN VON PRÜFKÖRPERN**
DEVICE FOR REPRODUCIBLY APPLYING STRESS TO TEST BODIES
DISPOSITIF POUR L'APPLICATION, DE MANIÈRE REPRODUCTIBLE, D'UNE CONTRAINTE SUR DES CORPS D'ESSAI

(30) Priorität: 07.02.2020 DE 102020201532
(43) Veröffentlichungstag der Anmeldung: 14.12.2022
(73) Patentinhaber: Robert Bosch GmbH, 70442 Stuttgart (DE)
(72) Erfinder: BRAAK, Richard, 70195 Stuttgart (DE)
(86) Internationale Anmeldenummer: PCT/EP2020/084862
(87) Internationale Veröffentlichungsnummer: WO 2021/155975

(56) Entgegenhaltungen:
- EP-A1- 2 929 988
- JP-A- H02 243 204
- KR-B1- 101 484 440
- US-A1- 2008 309 069
- MICROSTEP ET AL: "PipeCut CNC pipe and profile cutting machine", 31 October 2014 (2014-10-31), XP055778776, Retrieved from the Internet <URL:https://www.microstep.eu/machines/pipe-profile-cutting-machines/pipecut/>
- MICROSTEP ET AL: "Micro Punch", 26 August 2017 (2017-08-26), XP055778784, Retrieved from the Internet <URL:https://www.microstep.eu/accessories/marking/micropunch/>

## Beschreibung

Die vorliegende Erfindung betrifft das Beaufschlagen von Prüfkörpern mit einer definierten Beanspruchung mit dem Ziel, aus der Reaktion des Prüfkörpers auf diese Beanspruchung Rückschlüsse auf die Qualität einer Beschichtung des Prüfkörpers ziehen zu können.

### Stand der Technik

Viele Bauteile bestehen aus einem vergleichsweise preiswerten Grundwerkstoff, der an seiner Oberfläche mit einer Hartstoffschicht oder anderen Funktionsschicht vergütet ist. Die ordnungsgemäße Funktion des Bauteils kann dann davon abhängig sein, dass die Funktionsschicht intakt bleibt. Wenn der Grundwerkstoff mit einer Haftvermittlerschicht beschichtet und die Funktionsschicht auf diese Haftvermittlerschicht aufgebracht ist, kann ein Versagen der Haftvermittlerschicht auch ein Ablösen der Funktionsschicht zur Folge haben.

Im Betrieb des Bauteils können die genannten Schichten lokal überlastet werden. Es ist ein wichtiges Qualitätsmerkmal für die Schichten, ob derartige Schäden lokal begrenzt bleiben oder ob sie sich, beispielsweise durch Spannungsrisskorrosion, auch nach dem Ende der Überlastung selbsttätig weiter ausbreiten und im Extremfall bereits eine kurzzeitige lokale Überlastung das letztendliche Versagen der Schicht besiegeln kann.

Daher wird in der DE 10 2017 220 946 A1 ein Verfahren vorgeschlagen, mit dem eine Beschichtung auf einem Prüfkörper in definierter und reproduzierbarer Weise lokal beansprucht und der hierdurch in der Beschichtung verursachte Schaden ausgewertet werden kann.

In KR 101 484 440 B1 geht es um, das Aufbringen einer gut erkennbaren und exakten Markierung auf einem Rohr zu dessen Weiterbearbeitung.

In JP H02 243204 A geht es um ein Abhobeln der Oberfläche eines Kunststoffrohres.

### Offenbarung der Erfindung

Im Rahmen der Erfindung wurde eine Vorrichtung zum Beaufschlagen von Prüfkörpern mit einer definierten Beanspruchung entwickelt. Diese Vorrichtung ist insbesondere dafür konzipiert, eine große Zahl von nominell identisch gefertigten Prüfkörpern, die bei der Qualitätskontrolle der Serienfertigung anfallen, in genau identischer Weise zu beanspruchen. Wenn sich dann die an Beschichtungen der Bauteile jeweils verursachten Schäden voneinander unterscheiden, kann beispielsweise darauf geschlossen werden, dass es Qualitätsschwankungen bei der Herstellung der Beschichtungen gibt.

Die Vorrichtung ist in unabhängigen Anspruch 1 definiert.

Die Vorrichtung umfasst eine Führung, mit der die Prüfkörper in definierter und reproduzierbarer Weise zu einer Bearbeitungsposition führbar sind. Zu diesem Zweck hat die Führung einen Innenumfang, dessen Form zur Form eines Außenumfangs der Prüfkörper korrespondiert und dessen Größe eine translatorische Bewegung der Prüfkörper durch die Führung mit nur einem Freiheitsgrad zu der Bearbeitungsposition zulässt. Die Führung kann insbesondere beispielsweise in gerader Linie auf die Bearbeitungsposition zu führen.

Für den Vortrieb der Prüfkörper zur Bearbeitungsposition kann jeder beliebige Mechanismus genutzt werden. Besonders vorteilhaft kann die Führung als Fallrohr ausgebildet sein, in das die Prüfkörper eingeworfen werden können, um durch die Schwerkraft bis zum Erreichen der Bearbeitungsposition auf eine definierte Geschwindigkeit beschleunigt zu werden. Dies ist besonders kostengünstig und zuverlässig.

Die Vorrichtung umfasst weiterhin Graviermittel. Diese Graviermittel sind dazu ausgebildet, in Antwort darauf, dass ein Prüfkörper die Bearbeitungsposition erreicht, eine vorgegebene einschneidende Krafteinwirkung auf die Oberfläche dieses Prüfkörpers auszuüben. Wenn diese Krafteinwirkung für alle im Rahmen einer Reihenuntersuchung bearbeiteten Prüfkörper identisch ist, sind die jeweils infolgedessen entstehenden Schäden an Beschichtungen der Oberfläche objektiv miteinander vergleichbar.

Die Graviermittel umfassen mindestens ein Gravierelement sowie mindestens ein Federelement. Das Federelement treibt das Gravierelement in Richtung auf eine Ruhelage. Ein Prüfkörper, der die Bearbeitungsposition erreicht, lenkt das Gravierelement aus dieser Ruhelage aus. In diesem Zustand drückt das Federelement das Gravierelement mit einer Rückstellkraft gegen die Oberfläche des Prüfkörpers. Unter der Voraussetzung, dass das Federelement im elastischen Regime betrieben wird, ist diese Rückstellkraft für alle nominell identischen Prüfkörper gleich. Damit werden alle Prüfkörper qualitativ und quantitativ gleich beansprucht.

Das Gravierelement kann sich insbesondere beispielsweise in seiner Ruhelage innerhalb des Querschnitts der Führung befinden oder zumindest in diesen Querschnitt hineinragen. Zu diesem Zweck kann die Führung beispielsweise eine oder mehrere Aussparungen aufweisen. Die Bearbeitungsposition ist dann derjenige Ort, an dem der Prüfkörper in Kontakt mit Graviermittel kommt. Die Beanspruchung, mit der der Prüfkörper beaufschlagt wird, kann insbesondere eine ritzende Beanspruchung sein.

In einer besonders vorteilhaften Ausgestaltung fungiert ein für die Ausübung einer einschneidenden Krafteinwirkung funktionalisierter Bereich des Federelements als Gravierelement. Beispielsweise können in diesem Bereich eine oder mehrere Spitzen auf das Federelement aufgebracht sein. Das Federelement kann auch beispielsweise mit Diamantpaste oder einer anderen Substanz, die feste Schleifpartikel enthält, bestrichen sein.

Das Gravierelement, das eine einschneidende Krafteinwirkung auf die Oberfläche des Prüfkörpers ausübt, ist selbst ein Verschleißteil und muss in regelmäßigen Abständen ausgetauscht werden. Damit die vor und nach dem Austausch auf die Prüfkörper aufgebrachten Beanspruchungen identisch sind, ist es vorteilhaft, wenn Gravierelemente in genau reproduzierbarer Weise herstellbar sind. Federelemente sind ebenso wie beispielsweise Diamantpaste oder Spitzen als genormte Produkte mit stets gleichbleibenden Eigenschaften erhältlich, so dass ein Austausch die Beanspruchung, die auf die Prüfkörper aufgebracht wird, nicht ändert.

In einer weiteren besonders vorteilhaften Ausgestaltung umfassen die Graviermittel mindestens eine Antriebsquelle, die mindestens ein Gravierelement in eine periodische Bewegung versetzt. Diese periodische Bewegung kann insbesondere beispielsweise eine Schwingung oder Rotation sein. Die periodische Bewegung führt zu einem Reiben des Graviermittels gegen die Oberfläche eines Prüfkörpers, wenn das Gravierelement in Kontakt mit der Oberfläche ist. Durch die zusätzliche Nutzung der Antriebsquelle kann das Gravierelement insbesondere beispielsweise mit einer höheren Relativgeschwindigkeit als der Geschwindigkeit, mit der sich der Prüfkörper entlang der Führung bewegt, gegen die Oberfläche bewegt werden. Auf diese Weise kann die Beanspruchung der Oberfläche intensiviert werden. Dies kann beispielsweise sinnvoll sein, wenn auf der Oberfläche eine besonders widerstandsfähige Hartstoffbeschichtung aufgebracht ist.

Insbesondere kann beispielsweise mindestens ein Gravierelement als Sägeblatt ausgebildet sein. Sägeblätter sind als genormte Produkte erhältlich, so dass stetige Versorgung mit Gravierelementen, die immer gleiche Eigenschaften haben, gewährleistet ist.

Es kann alternativ oder auch in Kombination mindestens ein Gravierelement einen metallischen Grundkörper umfassen, welcher mit Partikeln besetzt ist, die härter sind als der Werkstoff des Grundkörpers. Beispielsweise kann ein Gravurkopf verwendet werden, der als eine mit Diamantpartikeln besetzte Stahlkugel ausgebildet ist. Solche Gravurköpfe sind ebenfalls als genormte Zubehörteile für Gravurgeräte verfügbar. Der Gravurkopf muss nicht zwingend in Rotation versetzt werden, um eine einschneidende Krafteinwirkung auf den Prüfkörper auszuüben; eine solche Krafteinwirkung findet auch dann statt, wenn der Prüfkörper lediglich an dem Gravurkopf vorbeistreicht. Die Krafteinwirkung ist jedoch intensiver, wenn der Gravurkopf axial rotiert.

Wie zuvor erläutert, kann das Vorbeistreichen eines insbesondere durch die Führung fallenden Prüfkörpers an einem oder mehreren Gravierelementen auf rein mechanischem Wege bewirken, dass das Gravierelement in Kontakt mit der Oberfläche des Prüfkörpers kommt. Dies ist jedoch nicht zwingend. In einer weiteren vorteilhaften Ausgestaltung umfasst die Vorrichtung mindestens einen Sensor, der in Antwort darauf, dass ein Prüfkörper die Bearbeitungsposition erreicht, ein Signal abgibt. Weiterhin ist mindestens ein Antrieb vorgesehen, der dazu ausgebildet ist, in Antwort auf dieses Signal mindestens ein Gravierelement in einen Kontakt mit der Oberfläche dieses Prüfkörpers zu bringen. Auf diese Weise kann die Ausübung der einschneidenden Krafteinwirkung von der Beförderung des Prüfkörpers zur Bearbeitungsposition entkoppelt werden. Der Prüfkörper kann also beispielsweise auf der Bearbeitungsposition angehalten und im ruhenden Zustand mit dem Gravierelement bearbeitet werden.

In einer weiteren besonders vorteilhaften Ausgestaltung ist am Innenumfang der Führung mindestens ein Auslass für ein Gas vorgesehen, welches ein Prüfkörper bei der Bewegung in Richtung auf die Bearbeitungsposition durch die Führung schiebt. Beispielsweise kann ein durch ein Fallrohr fallender Prüfkörper eine Luftsäule vor sich her schieben, und dies kann die Bewegung des Prüfkörpers bremsen. Wenn nun aber beispielsweise die Luft seitlich aus dem Fallrohr entweichen kann, wird diese Bremswirkung stark vermindert. Auf diese Weise wird die beim Fallen erreichte Geschwindigkeit an der Bearbeitungsposition unabhängiger von der geometrischen Form des Prüfkörpers. Es ist dann einfacher möglich, ein und dieselbe Vorrichtung für mehrere unterschiedliche Arten von Prüfkörpern zu nutzen.

In einer weiteren besonders vorteilhaften Ausgestaltung ist die Führung jenseits der Bearbeitungsposition bis zu einer Austrittsöffnung fortgesetzt. Zusätzlich ist mindestens ein Behälter vorgesehen, der sowohl ein flüssiges Korrosionsmedium als auch mindestens einen aus der Austrittsöffnung austretenden Prüfkörper aufzunehmen vermag. Die Vorrichtung eignet sich dann besonders gut für den Test, ob eine Beschichtung auf dem Prüfkörper anfällig für Spannungsrisskorrosion ist.

Bei der Spannungsrisskorrosion wird die Beschichtung ausgehend vom Ort der initialen lokalen Überlastung durch ein Korrosionsmedium, wie beispielsweise Luftfeuchtigkeit, angegriffen und weiter geschädigt. Indem die Prüfkörper in ein solches Korrosionsmedium eingebracht werden können, kann mit der Vorrichtung getestet werden, ob eine initiale lokale Überlastung lokal begrenzt bleibt oder durch Korrosion weitere Schäden nach sich zieht. Hierbei ist es vorteilhaft, dass die Prüfkörper ohne unnötige zeitliche Verzögerung direkt nach der einschneidenden Krafteinwirkung in das Korrosionsmedium gegeben werden. Eine eventuelle lokale Überlastung erhält so keine Gelegenheit, sich an trockener Luft von selbst gegen den Angriff des Korrosionsmediums zu passivieren.

Der Behälter kann zur Aufnahme eines oder auch mehrerer Prüfkörper ausgebildet sein. Für die Vergleichbarkeit und Reproduzierbarkeit kommt es nicht darauf an, dass alle zu vergleichenden Prüfkörper auf die Sekunde genau gleich lange dem Korrosionsmedium ausgesetzt werden. Vielmehr ist es beispielsweise möglich, 5 Minuten lang Prüfkörper im Behälter zu sammeln und das Korrosionsmedium dann noch weitere 30 Minuten lang einwirken zu lassen. Hauptursache hierfür ist, dass die letztendliche Zerstörung einer Beschichtung insbesondere in dem Anwendungsfall, in dem eine druckverspannte Funktionsschicht über eine Haftvermittlerschicht an den Grundwerkstoff gekoppelt ist, ein dreistufiger Prozess ist.

Ausgehend von einer lokalen Überlastung wird zunächst die Haftvermittlerschicht durch Spannungsrisskorrosion geschädigt. Dieser Prozess kommt irgendwann zum Erliegen, weil die geschädigten Bereiche nicht durchlässig für das Korrosionsmedium werden. Das Korrosionsmedium hat also irgendwann nicht mehr die Gelegenheit, weitere, noch nicht geschädigte Bereiche der Schicht zu erreichen.

Die Spannungsrisskorrosion führt jedoch dazu, dass der Spannungsunterschied zwischen der Funktionsschicht und der Haftvermittlerschicht vergrößert wird. In der Folge kommt es zu einer Blasenbildung, dem sogenannten "Buckling". Hierbei können Stücke aus der Schicht ausbrechen, und/oder das "Buckling" kann sich in "wurmfraßartigen" sinusförmigen oder linearen Blasen stabilisieren. Beides ermöglicht wiederum dem Korrosionsmedium, Bereiche der Haftvermittlerschicht zu erreichen, die noch nicht geschädigt sind. Damit beginnt der Zyklus von neuem.

Wenn also die Spannungsrisskorrosion zum Erliegen gekommen ist, weil keine bislang ungeschädigten Bereiche mehr erreicht werden, macht es so lange keinen nennenswerten Unterschied, wie lange der Prüfkörper noch dem Korrosionsmedium ausgesetzt bleibt, bis durch das Buckling bzw. Ausbrechen weitere bislang ungeschädigte Bereiche zugänglich werden.

Nach dem Einwirken des Korrosionsmediums für eine festgelegte Dauer kann der insgesamt an einer Beschichtung des Prüfkörpers angerichtete Gesamtschaden mit beliebigen Methoden begutachtet werden, beispielsweise durch Mikroskopieren. So können etwa Bilder einer Mikroskopkamera durch einen Mitarbeiter oder auch durch digitale Bilderkennung auf Schäden ausgewertet werden. Beispielsweise können die Bilder einem trainierten Klassifikator auf der Basis eines künstlichen neuronalen Netzwerks zugeführt werden. Der Klassifikator kann beispielsweise darauf trainiert sein, die Bilder in abgestufte Schadensklassen zwischen 1 (keine bis sehr geringe Schädigung) und 5 (vollständige Zerstörung der Schicht) einzuteilen.

Um die Tendenz zur Passivierung an trockener Luft noch stärker zu unterdrücken, ist in einer weiteren besonders vorteilhaften Ausgestaltung eine Zuführung für ein Inertgas mindestens in den Bereich der Führung zwischen der Bearbeitungsposition und der Austrittsöffnung vorgesehen. Damit wird verhindert, dass die Passivierung das letztendliche Ergebnis des Tests zu einem geringeren Gesamtschaden der Beschichtung und damit zu einer besseren als der angemessenen Bewertung verschiebt.

In einer weiteren besonders vorteilhaften Ausgestaltung sind die Graviermittel in einer Kammer angeordnet, die einen Außenumfang der Führung umgibt. Diese Kammer ist in mehrere Segmente unterteilt, die durch eine Bewegung von Segmenten senkrecht zur Achse der Führung voneinander trennbar sind.

Die Kammer schützt beispielsweise die Graviermittel vor Verschmutzungen, die die einschneidende Krafteinwirkung auf die Oberfläche verfälschen könnten.

Durch eine entsprechende Wandstärke bzw. Materialsteifigkeit kann sie auch äußere Krafteinwirkungen vom mechanischen Aufbau der Graviermittel fernhalten und so beispielsweise verhindern, dass Anpresskräfte zwischen einem Gravierelement und der Oberfläche des Prüfkörpers verfälscht werden.

Wie zuvor erläutert, sind jedoch insbesondere die Gravierelemente Verschleißteile, die regelmäßig gewechselt werden müssen. Indem die Segmente voneinander trennbar sind, wird der Zugang zu den Gravierelementen, und damit auch der Wechsel, erleichtert.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Erstes Ausführungsbeispiel der Vorrichtung 1, ausgelegt zum Behandeln von Prüfkörpern 2 während des Falls durch die Führung 3;
Figur 2 Zweites Ausführungsbeispiel der Vorrichtung 1, ausgelegt zum Behandeln von Prüfkörpern 2 in Ruhe an der Bearbeitungsposition 4;
Figur 3 Sägeblätter 51a (Figur 3a) und mit Partikeln 51c funktionalisierte metallische Grundkörper 51b (Figur 3b) als Gravierelemente 51;
Figur 4 Kammer 12 um die Führung 3, unterteilt in vier Segmente 12a-12d.

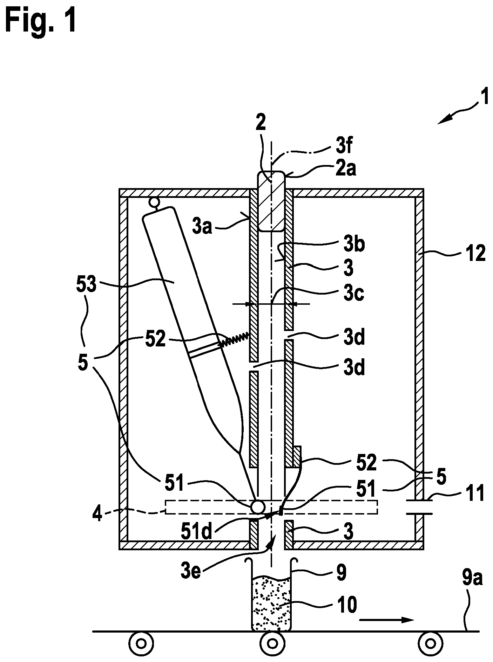

Figur 1 zeigt ein erstes Ausführungsbeispiel der Vorrichtung 1 in Schnittzeichnung. Eine Führung 3 für Prüfkörper 2 weist einen Außenumfang 3a, einen Innenumfang 3b und einen Querschnitt 3c auf. Die Form des Innenumfangs 3b der Führung 3 korrespondiert zur Form des Außenumfangs 2a der Prüfkörper 2. Die Prüfkörper 2 können sich durch die Führung 3 mit nur einem Freiheitsgrad entlang der von oben nach unten führenden Achse 3f der Führung 3 zur Bearbeitungsposition 4 und weiter zur Austrittsöffnung 3e aus der Führung 3 bewegen. Damit diese Bewegung der Prüfkörper 2 nicht durch einen Luftstau behindert wird, weist die Führung 3 Auslässe 3d für die Luft auf, die ein jeder Prüfkörper 2 in der Führung 3 vor sich her schiebt.

An der Bearbeitungsposition 4 wird mit Graviermitteln 5 eine vorgegebene einschneidende Kraftwirkung auf die Oberfläche des Prüfkörpers 2 ausgeübt. In dem in Figur 1 gezeichneten Beispiel wird der Prüfkörper 2 entlang seiner gesamten Höhe bearbeitet. Es sind beispielhaft zwei mögliche Ausführungsformen von Graviermitteln 5 eingezeichnet.

Links von der Führung 3 sind beispielhaft Graviermittel 5 eingezeichnet, die mit Hilfsenergie arbeiten. Ein hier als Gravurkopf ausgebildetes Gravierelement 51 wird von einer Antriebsquelle 53 mittels der, beispielsweise elektrischen, Hilfsenergie in Rotation versetzt und über ein Federelement 52 in die in Figur 1 gezeigte Ruhelage gedrückt, in der das Gravierelement 51 in den Querschnitt 3c der Führung 3 hineinragt. Wenn der Prüfkörper 2 an der Bearbeitungsposition 4 den Querschnitt 3c der Führung 3 vollständig ausfüllt, wird das Gravierelement 51 aus seiner Ruhelage ausgelenkt. Das Federelement 52 übt eine Rückstellkraft in Richtung der Ruhelage aus. Mit dieser Rückstellkraft wird das Gravierelement 51 gegen die Oberfläche des Prüfkörpers 2 gedrückt.

Rechts von der Führung 3 sind beispielhaft Graviermittel 5 eingezeichnet, die ohne Hilfsenergie arbeiten. Ein Federelement 52 ist mit einem Ende an der Außenseite der Führung 3 montiert und weist an seinem freien Ende einen Bereich aus, der durch Bestreichen mit Diamantpaste 51d für die Ausübung einer einschneidenden Krafteinwirkung funktionalisiert wurde und somit als Gravierelement 51 dienen kann. Auch dieses Gravierelement 51 ragt in seiner in Figur 1 gezeigten Ruhelage in den Querschnitt 3c der Führung 3 hinein und wird aus der Ruhelage ausgelenkt, wenn der Prüfkörper 2 an der Bearbeitungsposition 4 den Querschnitt 3c der Führung 3 vollständig ausfüllt. Das Federelement 52 übt wiederum eine Rückstellkraft in Richtung der Ruhelage aus, und mit dieser Rückstellkraft wird das Gravierelement 51 gegen die Oberfläche des Prüfkörpers 2 gedrückt.

Sämtliche Graviermittel 5 sind zum Schutz vor Beschädigung, Verschmutzung und äußeren Krafteinwirkungen in einer die Führung 3 umgebenden Kammer 12 angeordnet. Diese Kammer 12 hat eine Zuführung 11, über die ein Inertgas eingeführt werden und die Umgebungsluft mindestens an der Bearbeitungsposition 4 verdrängen kann.

Die Führung 3 weist an ihrem unteren Ende eine Austrittsöffnung 3e auf, über die der Prüfkörper 2 nach der mechanischen Bearbeitung in einen Behälter 9 mit einem Korrosionsmedium 10 überführt werden kann. Auf diese Weise kann ausgehend von der durch die Graviermittel 5 in die Oberfläche des Prüfkörpers 2 eingebrachten Schädigung eine definierte Spannungsrisskorrosion in Gang gesetzt werden. Der Behälter 9 ist in diesem Beispiel lediglich für die Aufnahme eines Prüfkörpers 2 vorgesehen. Er steht daher auf einem Förderband 9a, mit dem ein weiterer Behälter 9 für den nächsten Prüfkörper 2 unter die Austrittsöffnung 3e der Führung 3 gefahren werden kann.

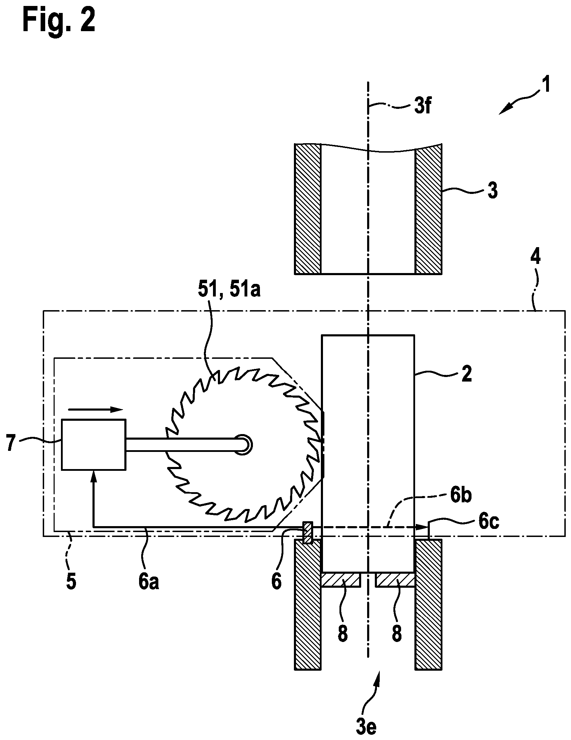

Figur 2 zeigt ein zweites Ausführungsbeispiel der Vorrichtung 1 in Schnittzeichnung. Wie in Figur 1 verläuft die Achse 3f der Führung 3 von oben nach unten. Im Unterschied zu Figur 1 ist hier vorgesehen, dass der Prüfkörper an der Bearbeitungsposition 4 durch das Tor 8 festgehalten wird. Die Graviermittel 5 umfassen in diesem Beispiel ein als Sägeblatt 51a ausgebildetes Gravierelement 51 sowie einen Antrieb 7, mit dem dieses Sägeblatt 51a in Kontakt mit der Oberfläche des Prüfkörpers 2 gebracht werden kann. Das geschieht dann, wenn Licht 6b, das vom Sensor 6 in Richtung des Spiegels 6c ausgesendet wird und von diesem Spiegel 6c eigentlich zurück zum Sensor 6 reflektiert werden sollte, durch den Prüfkörper 2 abgeschattet wird. In diesem Fall gibt der Sensor 6 ein entsprechendes Signal 6a an den Antrieb 7. Wenn die Bearbeitung des Prüfkörpers 2 abgeschlossen ist, öffnet sich das Tor 8, und der Prüfkörper 2 fällt nach unten aus der Austrittsöffnung 3e der Führung 3 heraus.

Eine Antriebsquelle 53 für eine Rotation des Sägeblatts 51a ist in Figur 2 der Übersichtlichkeit halber nicht eingezeichnet.

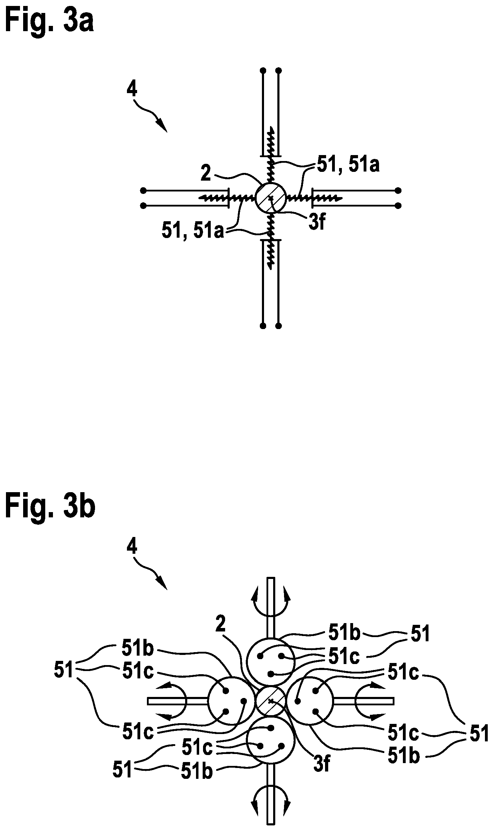

Figur 3 zeigt zwei Beispiele für symmetrisch um einen Prüfkörper 2 angeordnete Gravierelemente 51. Die Perspektive ist hier eine Aufsicht aus der Richtung, aus der der Prüfkörper 2 jeweils an die Bearbeitungsposition 4 gekommen ist. Die Achse 3f der in Figur 3 nicht eingezeichneten Führung 3 steht also senkrecht auf der Zeichenebene.

Figur 3a zeigt vier Sägeblätter 51a als Gravierelemente 51. Die Sägeblätter 51a sind kreisrund und rotieren jeweils um eine Achse, die senkrecht auf dem jeweiligen Sägeblatt 51a steht und parallel zur Zeichenebene ist.

Figur 3b zeigt vier Gravierelemente 51, die jeweils einen metallischen Grundkörper 51b und darauf angeordnete harte Partikel 51c umfassen. Diese Gravierelemente 51 rotieren jeweils um eine vom Prüfkörper 2 weg zeigende Achse.

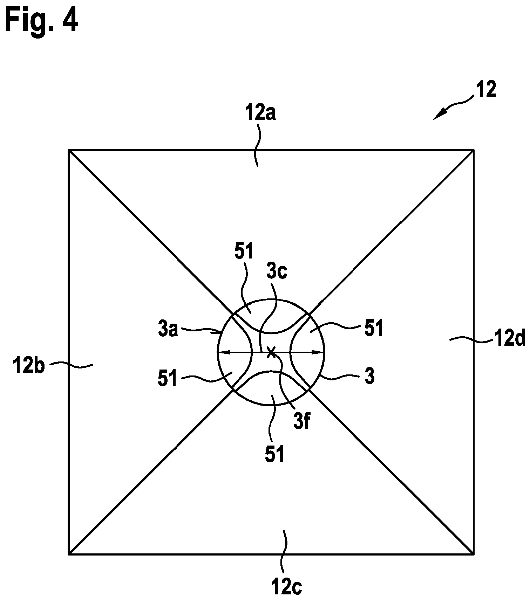

Figur 4 zeigt eine aus vier Segmenten 12a-12d zusammengesetzte Kammer 12 in Aufsicht. Ein Eingang in die Führung 3 ist frei gelassen, damit Prüfkörper 2 in die Führung 3 eingeschoben werden können. Im Inneren der Kammer sind Gravierelemente 51 sichtbar, die jeweils in den Querschnitt 3c der Führung 3 hineinragen. Wie auch in Figur 3 steht die Achse 3f der Führung 3 senkrecht auf der Zeichenebene.

## Patentansprüche

1. Vorrichtung (1) zum Beaufschlagen von Prüfkörpern (2) mit einer definierten Beanspruchung, umfassend
• eine Führung (3) mit einem Innenumfang (3b), dessen Form zur Form eines Außenumfangs (2a) der Prüfkörper (2) korrespondiert und dessen Größe eine translatorische Bewegung der Prüfkörper (2) durch die Führung (3) mit nur einem Freiheitsgrad zu einer Bearbeitungsposition (4) zulässt sowie
o Graviermittel (5), die dazu ausgebildet sind, in Antwort darauf, dass ein Prüfkörper (2) die Bearbeitungsposition (4) erreicht, eine vorgegebene einschneidende Krafteinwirkung auf die Oberfläche dieses Prüfkörpers (2) auszuüben, wobei die Graviermittel (5) mindestens ein Gravierelement (51) sowie mindestens ein Federelement (52) umfassen, wobei das Federelement (52) das Gravierelement (51) in Richtung auf eine Ruhelage treibt und wobei ein Prüfkörper (2), der die Bearbeitungsposition (4) erreicht, das Gravierelement (51) aus dieser Ruhelage auslenkt.

2. Vorrichtung (1) nach Anspruch 1, wobei sich das Gravierelement (51) in seiner Ruhelage innerhalb des Querschnitts (3c) der Führung (3) befindet oder zumindest in diesen Querschnitt (3c) hineinragt.

3. Vorrichtung (1) nach einem der Ansprüche 1 oder 2, wobei ein für die Ausübung einer einschneidenden Krafteinwirkung funktionalisierter Bereich des Federelements (52) als Gravierelement (51) fungiert.

4. Vorrichtung (1) nach einem der Ansprüche 1 bis 3, wobei die Graviermittel (5) mindestens eine Antriebsquelle (53) umfassen, die mindestens ein Gravierelement (51) in eine periodische Bewegung versetzt, wobei die periodische Bewegung zu einem Reiben des Gravierelements (51) gegen die Oberfläche eines Prüfkörpers (2) führt, wenn das Gravierelement (51) in Kontakt mit der Oberfläche ist.

5. Vorrichtung (1) nach Anspruch 4, wobei mindestens ein Gravierelement (51) als Sägeblatt (51a) ausgebildet ist.

6. Vorrichtung (1) nach einem der Ansprüche 1 bis 5, wobei mindestens ein Gravierelement (51) einen metallischen Grundkörper (51b) umfasst, welcher mit Partikeln (51c) besetzt ist, die härter sind als der Werkstoff des Grundkörpers (51b).

7. Vorrichtung (1) nach einem der Ansprüche 1 bis 6, weiterhin umfassend mindestens einen Sensor (6), der in Antwort darauf, dass ein Prüfkörper (2) die Bearbeitungsposition (4) erreicht, ein Signal (6a) abgibt, sowie mindestens einen Antrieb (7), der dazu ausgebildet ist, in Antwort auf dieses Signal (6a) mindestens ein Gravierelement (51) in einen Kontakt mit der Oberfläche dieses Prüfkörpers (2) zu bringen.

8. Vorrichtung (1) nach einem der Ansprüche 1 bis 7, wobei am Innenumfang (3b) der Führung (3) mindestens ein Auslass (3d) für ein Gas vorgesehen ist, welches ein Prüfkörper (2) bei der Bewegung in Richtung auf die Bearbeitungsposition (4) durch die Führung (3) schiebt.

9. Vorrichtung (1) nach einem der Ansprüche 1 bis 8, wobei die Führung (3) jenseits der Bearbeitungsposition (4) bis zu einer Austrittsöffnung (3e) fortgesetzt ist und wobei zusätzlich mindestens ein Behälter (9) vorgesehen ist, der sowohl ein flüssiges Korrosionsmedium (10) als auch mindestens einen aus der Austrittsöffnung (3e) austretenden Prüfkörper (2) aufzunehmen vermag.

10. Vorrichtung (1) nach Anspruch 9, weiterhin umfassend eine Zuführung (11) für ein Inertgas mindestens in den Bereich der Führung (3) zwischen der Bearbeitungsposition (4) und der Austrittsöffnung (3e).

11. Vorrichtung (1) nach einem der Ansprüche 1 bis 10, wobei die Graviermittel (5) in einer Kammer (12) angeordnet sind, die einen Außenumfang (3a) der Führung (3) umgibt, wobei diese Kammer (12) in mehrere Segmente (12a-12d) unterteilt ist, die durch eine Bewegung von Segmenten (12a-12d) senkrecht zu einer Achse (3f) der Führung (3) voneinander trennbar sind.

## Claims

1. Device (1) for applying a defined stress to test specimens (2), comprising
• a guide (3) having an inner circumference (3b), the shape of which corresponds to the shape of an outer circumference (2a) of the test specimen (2) and the size of which permits a translational movement of the test specimen (2) to a machining position (4) through the guide (3) with only one degree of freedom, and
∘ engraving means (5) which are designed to exert a specified cutting action of force on the surface of this test specimen (2) in response to a test specimen (2) reaching the machining position (4), wherein the engraving means (5) comprise at least one engraving element (51) and at least one spring element (52), wherein the spring element (52) drives the engraving element (51) in the direction of an inoperative position and wherein a test specimen (2), which reaches the machining position (4), deflects the engraving element (51) out of this inoperative position.

2. Device (1) according to Claim 1, wherein the engraving element (51) is located within the cross section (3c) of the guide (3) or at least protrudes into this cross section (3c) in its inoperative position.

3. Device (1) according to either of Claims 1 and 2, wherein a region of the spring element (52) functionalized for exerting a cutting action of force acts as an engraving element (51).

4. Device (1) according to any of Claims 1 to 3, wherein the engraving means (5) comprise at least one drive source (53), which sets at least one engraving element (51) in periodic motion, wherein the periodic motion leads to the engraving element (51) rubbing against the surface of a test specimen (2) when the engraving element (51) is in contact with the surface.

5. Device (1) according to Claim 4, wherein at least one engraving element (51) is designed as a saw blade (51a).

6. Device (1) according to any of Claims 1 to 5, wherein at least one engraving element (51) comprises a metal main body (51b) which is studded with particles (51c) which are harder than the material of the main body (51b).

7. Device (1) according to any of Claims 1 to 6, further comprising at least one sensor (6), which emits a signal (6a) in response to a test specimen (2) reaching the machining position (4), and at least one drive (7), which is designed to bring at least one engraving element (51) into contact with the surface of this test specimen (2) in response to this signal (6a).

8. Device (1) according to any of Claims 1 to 7, wherein at least one outlet (3d) for a gas is provided on the inner circumference (3b) of the guide (3), the gas pushing a test specimen (2) through the guide (3) during the movement in the direction of the machining position (4).

9. Device (1) according to any of Claims 1 to 8, wherein the guide (3) continues up to an outlet opening (3e) on the other side of the machining position (4), and wherein at least one container (9) is additionally provided, which is capable of receiving both a liquid corrosion medium (10) and at least one test specimen (2) exiting from the outlet opening (3e).

10. Device (1) according to Claim 9, further comprising a feed (11) for an inert gas at least into the region of the guide (3) between the machining position (4) and the outlet opening (3e).

11. Device (1) according to any of Claims 1 to 10, wherein the engraving means (5) are arranged in a chamber (12) which surrounds an outer circumference (3a) of the guide (3), wherein this chamber (12) is divided into several segments (12a-12d), which can be separated from each other by a movement of segments (12a-12d) perpendicular to an axis (3f) of the guide (3).

## Revendications

1. Dispositif (1) destiné à soumettre des corps d'essai (2) à l'action d'une contrainte définie, comprenant
• un guide (3) avec une périphérie intérieure (3b), dont la forme correspond à la forme d'une périphérie extérieure (2a) des corps d'essai (2) et dont la taille permet un déplacement par translation des corps d'essai (2) à travers le guide (3) avec seulement un degré de liberté jusqu'à une position d'usinage (4), ainsi
o que des moyens de gravure (5), qui sont formés pour exercer une force d'incision prédéfinie sur la surface dudit corps d'essai (2) en réponse au fait qu'un corps d'essai (2) atteint la position d'usinage (4), les moyens de gravure (5) comprenant au moins un élément de gravure (51) ainsi qu'au moins un élément de ressort (52), l'élément de ressort (52) entraînant l'élément de gravure (51) en direction d'une position de repos et un corps d'essai (2) qui atteint la position d'usinage (4) déviant l'élément de gravure (51) hors de ladite position de repos.

2. Dispositif (1) selon la revendication 1, l'élément de gravure (51) se trouvant dans sa position de repos à l'intérieur de la section transversale (3c) du guide (3) ou faisant saillie au moins dans ladite section transversale (3c).

3. Dispositif (1) selon l'une des revendications 1 ou 2, une zone de l'élément de ressort (52) fonctionnalisée pour exercer une force d'incision faisant office d'élément de gravure (51).

4. Dispositif (1) selon l'une des revendications 1 à 3, les moyens de gravure (5) comprenant au moins une source d'entraînement (53), qui amène au moins un élément de gravure (51) dans un déplacement périodique, le déplacement périodique conduisant à un frottement de l'élément de gravure (51) contre la surface d'un corps d'essai (2), lorsque l'élément de gravure (51) est en contact avec la surface.

5. Dispositif (1) selon la revendication 4, au moins un élément de gravure (51) étant formé comme une lame de scie (51a).

6. Dispositif (1) selon l'une des revendications 1 à 5, au moins un élément de gravure (51) comprenant un corps principal métallique (51b), qui est occupé par des particules (51c) qui sont plus dures que le matériau du corps principal (51b).

7. Dispositif (1) selon l'une des revendications 1 à 6, comprenant par ailleurs au moins un capteur (6) qui, en réponse au fait qu'un corps d'essai (2) atteint la position d'usinage (4), émet un signal (6a), ainsi qu'au moins un entraînement (7) qui est formé pour amener au moins un élément de gravure (51) en contact avec la surface dudit corps d'essai (2) en réponse audit signal (6a).

8. Dispositif (1) selon l'une des revendications 1 à 7, au moins une sortie (3d) pour un gaz étant prévue sur la périphérie intérieure (3b) du guide (3), laquelle pousse un corps d'essai (2) à travers le guide (3) pendant le déplacement en direction de la position d'usinage (4).

9. Dispositif (1) selon l'une des revendications 1 à 8, le guide (3) se prolongeant au-delà de la position d'usinage (4) jusqu'à une ouverture de sortie (3e), et au moins un contenant (9) étant prévu en supplément, lequel est en mesure de recevoir à la fois un milieu de corrosion liquide (10) et au moins un corps d'essai (2) sortant de l'ouverture de sortie (3e).

10. Dispositif (1) selon la revendication 9, comprenant par ailleurs une arrivée (11) pour un gaz inerte au moins dans la zone du guide (3) entre la position d'usinage (4) et l'ouverture de sortie (3e).

11. Dispositif (1) selon l'une des revendications 1 à 10, les moyens de gravure (5) étant disposés dans une chambre (12), qui entoure une périphérie extérieure (3a) du guide (3), ladite chambre (12) étant divisée en plusieurs segments (12a-12d), qui peuvent être séparés les uns des autres par un déplacement de segments (12a-12d) perpendiculairement à un axe (3f) du guide (3).
